# EUROPÄISCHE PATENTSCHRIFT

(11) **EP 1 747 838 B1**
(45) Veröffentlichungstag und Bekanntmachung des Hinweises auf die Patenterteilung: **26.11.2008**
(21) Anmeldenummer: 06013458.2
(22) Anmeldetag: 29.06.2006
(51) Int. Cl.: B23K 26/40, A23N 15/06, B23K 26/08

(54) **Verfahren und Vorrichtung für die Markierung von Obst mittels Laser mit vor der Markierung einem Reinigungs-/Trocknungsvorgang und nach der Makierung einem Versiegelungsvorgang des markierten Bereichs**
Process and device for the marking of fruits through laser with, before the marking, a cleaning/drying step and, after the marking, a sealing of the marked area
Procédé et dispositif de marquage de fruits par laser avec, avant le marquage, une étape de nettoyage/séchage et, après le marquage, une étape de scellement de la zone marquée

(30) Priorität: 28.07.2005 IT BZ20050038
(43) Veröffentlichungstag der Anmeldung: 31.01.2007
(73) Patentinhaber: B. LONGOBARDI G.m.b.H., 39011 Lana BZ (IT)
(72) Erfinder: Longobardi, Robert, 39011 Lana (BZ) (IT)
(74) Vertreter: Oberosler, Ludwig

(56) Entgegenhaltungen:
- WO-A2-20/05102079
- US-A- 3 381 610
- US-A- 4 230 065
- US-A- 5 897 797
- US-A1- 2005 077 274
- US-B1- 6 180 914

## Beschreibung

Die Erfindung bezieht sich auf ein Verfahren und eine Vorrichtung für die Markierung von Obst gemäß dem Oberbegriff der Ansprüche 1 und 14 (siehe, z.B., US-A-5 897 797) während dieses eine Sortiermaschine, eine Verpackungsmaschine oder eine spezifische Bearbeitungsmaschine durchläuft, vor dessen Verpackung und nachdem die Erhebung der Parameter erfolgt ist welche die Qualität und die Stückgröße bestimmen. Die Markierung besteht aus einfachen oder zusammengesetzten graphischen Elementen welche insgesamt sehr kleine Ausmaße, z.B. von ca. 3 x 3mm, aufweisen, sie ist nicht löschbar und sichert die Auffindbarkeit des Produzenten, des Herstellungsgebietes, usw.

Es ist die Markierung mittels Laser, von Käse, von Fleisch oder anderer Nahrungsmittel, bekannt, weiters ist auch die Markierung von Wasser- und Honigmelonen bekannt. Diese bekannten Verfahren sind z.B. in der DE 19646813, in der EP 0685154, in der JP 20040449082, in der NL 9401841 beschrieben; die Verfahren und die entsprechenden Vorrichtungen welche in den obgenannten Veröffentlichungen beschrieben sind, sind nur für solche Produkte geeignet an welchen die Markierung mittels Laser nicht eine derartige Beschädigung bewirkt welche die Qualität, die Haltbarkeit oder das Aussehen des behandelten Produktes beeinträchtigen würde, tatsächlich wird die Markierung an der Rinde des Käses, an der Schwarte des Schinkens, an der Haut der Würste oder an der dicken, widerstandsfähigen und nicht essbaren Schale der Melonen durchgeführt.

Die US 5,897,797 schlägt ein Laser-Markierungssystem vor welches keine Skannerschablone verwendet sondern für eine Achse einen galvanometrischen Spiegel und für die zweite Achse ein rotierendes Prisma verwendet. Das beschriebene Verfahren setzt sich als Ziel die Frucht zu markieren ohne deren Schale zu beschädigen. Dieses Verfahren sieht keinerlei Vor- und/oder Nachbehandlung der zu markierenden Frucht vor. Natürlich sollten die Markierungszeichen nicht tiefer als die Schalendicke sein, aus diesem Grund wird die Kontrolle/Dosierung der Energie des Lasers mittels vorprogrammiertem Computer, in Abhängigkeit der Maße und der Produktart, vorgeschlagen, dies jedoch ohne "individuelle" Erhebungen an den einzelnen zu markierenden Stücken durchzuführen. Mittels einer Fotozelle wird die Anwesenheit des zu markierenden Stückes in Markierposition erhoben, wobei das Stück eine Position oberhalb der Laserquelle, bzw. dem Austritt des Lasers, einnimmt. Um zu verhindern dass Staub oder Tropfen von der Frucht oder vom Träger der Frucht auf die darunter positionierte Optik des Lasers fallen und um eine Kühlung der Markierungsstelle zu erreichen, wirkt in diesem Bereich ein Luftstrahl. Um die Markierung besser sichtbar zu machen wird diese mit Farbmitteln (Kontrasmitteln) behandelt welche von der Markierung aufgenommen werden. Das vorgeschlagene Verfahren sieht nicht ein "individuelles" Dosieren der Energie des Lasers innerhalb kürzester Zeit basierend auf den, an den einzelnen zu markierenden Stücken, erhobenen Parametern, vor, weiters wird die Positionierung jener zu markierenden Stücke nicht berücksichtigt, welche eine Stellung einnehmen in welcher ein Zielbereich geboten wird der nicht markierbar ist weil er z.B. die Stengel- oder Kelchgrube, bzw. die unmittelbar daran angrenzenden Bereiche, umfasst. Dies bewirkt, dass entweder der prozentuelle Anteil der lesbaren Markierungen relativ niedrig ist, oder dass sich die Markierung an den markierten Fruchtteilen zu schädigend auswirkt.

Aus der US-A-6180914 ist ein Markieren von Pflanzenblättern insbesondere von Tabakblättern und Zigarren durch Laserstrahl bekannt. Dieses Verfahren umfasst eine Laserquelle und eine doppelte pneumatisch verstellbare und fixierbare Produkthalterung dabei ist diese so konzipiert dass, während dem Markierungsvorgang am Produkt, am zweiten Platz der Produkthalterung das folgende zu markierende Produkt händisch aufgelegt und positioniert werden kann. Die Ablenkung des Laserstrahles erfolgt über galvanometrische Spiegel, es werden auch Markierungsschablonen verwendet. Um die Markierung besser sichtbar zu machen wird diese mit Chemikalien (Kontrastmitteln) behandelt, es wird auch eine Trocknung mittels Pressluft und eine Behandlung mit Pigmenten und Versiegelungsmitteln vorgeschlagen.
Dieses Verfahren sieht nicht ein dynamisches individuelles Dosieren der Energie des Lasers innerhalb kürzester Zeit basierend auf den, an den einzeln zu markierenden Stücken, erhobenen Parametern, vor. Es wird die Möglichkeit erwähnt während des Laserbrennens die Geschwindigkeit des Laserstrahles und/oder die Laserenergie zu verändern ohne darauf hinzuweisen auf welche Weise und nach welchen Parametern dies geschieht. Beim Durchbrennen der Blätter wird die Laserquelle auf eine höhere Energiestufe eingestellt so dass sich der Laserstrahl durch die Blattfasern brennt, dabei ist die Oberflächenfarbe des Blattes von Bedeutung und die Einstellungen des Laserstrahles erfolgen gemäß voreingestellter Werte (Laserenergie / Pulsierung / Distanz Laserquelle-Zieloberfläche). Diese Einstellungswerte sind als "Rezepte" für unterschiedliche Produktionseinheiten gespeichert und werden bei Bedarf über PC und Datenbank abgerufen. In dieser Datenbank sind auch die vorher definierten und als Bitmap abgespeicherten graphischen Vorlagen enthalten. Die durchschnittliche Prozesszeit zum Markieren beträgt für eine automatisierte Brennstation ca. 10 Sekunden; das händische Verfahren sieht eine durchschnittliche Bearbeitungszeit von ca. 30 Sekunden vor. Dieses Verfahren ist nicht geeignet die Ware im Durchlauf zu markierenden zu markieren ohne sie in irgend einer Weise zu beschädigen, weil die Prozesszeiten zu hoch sind und vor allem weil eine individuelle Erhebung der Einstellungsparameter nicht vorgesehen ist und somit eine individuelle Anpassung an die Produkteigenschaften fehlt.

Aus der US-A-2005/0077274 ist das Markieren von Fleisch und aus Fleisch gefertigten Endprodukten mittels Laserstrahl und eventuell mittels erhitztem Brennkopf bekannt. Die erforderlichen Einstellungen des Lasers erfolgen je nach Beschaffenheit und Zustand des Produktes händisch oder mittels PLC. Der Laserstrahl kann im Voraus mittels PLC (Anspruch 3), mit oder ohne Sensorüberwachung eingestellt werden (siehe Absatz 0011). Es ist vorgesehen dass die Laserquelle durch einen über elektrischen Widerstand erhitzen Brennkopf ersetzt wird wobei durch Annähern des Metallkopfes an die Fleischoberfläche oder durch Kontakt mit dieser die Markierung erfolgt. Dieses Verfahren ermöglicht nicht eine Markierung der Ware im Durchlauf, z.B. an einer Bearbeitungs-, Sortierungs-oder Verpackungsmaschine. Bei der Einstellung des Laserstrahls wird nicht die Schonung der Produktoberfläche berücksichtigt das Produkt wird durch Laserstrahl oder durch einen erhitzten beweglichen Brennkopf "gebrandmarkt".

Die Markierung mittels Laser ist ein thermisches Verfahren welches die Wärme eines konzentrierten Lichtstrahles hoher Intensität nutzt um die Oberfläche, bzw. eine Oberflächenschicht des zu markierenden Produktes zu verändern. Diese Veränderung beeinträchtigt im Falle von Käse, Fleisch und Wurstwaren, nicht die Haltbarkeit, die Qualität oder das Aussehen des Produktes, für diese Produkte ist auch immer noch die Markierung durch Einbrennen gebräuchlich; auch bei Obst mit dicker, nicht essbarer, Schale bewirkt die Veränderung durch das Markieren keinerlei Probleme.

Die Erfindung stellt sich die Aufgabe ein Verfahren und die entsprechende Vorrichtung zur unlöschbaren Markierung von Früchten, während deren Fortbewegung auf bekannten Sortiermaschinen oder auf Transportvorrichtungen, mittels Laserstrahl zu schaffen, ohne die Fortbewegung, die anschließende Aufbewahrung, die Qualität und das Aussehen zu beeinträchtigen und wobei die Auffindung z.B. des Produktionsgebietes, des Verarbeitungs-/Verpackungsbetriebes, usw. garantiert wird, indem die Wahl zwischen einer mit freiem Auge lesbarer oder einer nur mit Hilfe spezifischer Instrumente lesbarer Markierung geboten wird. Die erfindungsgemäße Markierung ist, unabhängig von den individuellen Merkmalen der einzelnen Früchte, immer homogen in der Ausführung und was das gewünschte, mit freiem Auge lesbare oder nur mit Hilfe spezifischer Instrumente lesbare, Endergebnis betrifft.

Die Erfindung ist im Verfahrenanspruch 1 und im Vorrichtungsanspruch 14 definiert.

Zur Lösung dieser Aufgabe schlägt die Erfindung folgendes vor:
- die Nutzung der Daten und Erhebungen welche, infolge des Durchlaufens der einzelnen Früchte auf einer fortschrittlichen Sortiermaschine oder auf einer spezifischen Erhebungsstation, zur Verfügung stehen, um ein Laserstrahlgerät so zu steuern, regeln und optimieren, dass eine Markierung erreicht wird welche unmittelbar mit freiem Auge oder nur mit Hilfe spezifischer Instrumente lesbar ist und dass diese Markierung, betreffend Kontrast und Definition, sich zufriedenstellend präsentiert aber sich nicht in einem Grad beschädigend auswirkt welcher sich negativ auf die Haltbarkeit und das Aussehen der Frucht auswirken würde;
- die Vorbehandlung des zu markierenden Bereiches um eine gleichmäßige Markierung frei von Mängeln zu erhalten, welche durch die Präsenz von Tropfen oder Flüssigkeitsschichten, von Staub oder fremder, auf der Schale, abgelagerter Partikel, verursacht werden könnten;
- die Auswahl der Art des Lasers, der Wellenlänge, der Leistung und der Folge der Impulse, des Durchmessers des Strahles und des Überdeckungsgrades der Zeichen entlang der Markierungslinie um eine weniger aggressive Markierung zu erreichen welche kaum oberflächliche Veränderungen bewirkt, welche die tiefer liegende Schicht der Schale und das Fleisch der Früchte nicht schädigt;
- die Durchführung der Markierung ohne den Durchlauf der Früchte auf der Bearbeitungsmaschine, bzw. auf der Fördereinheit, zu beeinträchtigen um die Nennleistung der Maschine, bzw. der Anlage nicht zu vermindern;
- die Wirkung des Laserstrahles von oben um eine Beschmutzung der Laseroptik durch Abfallen von Staub, von Tropfen oder von Verunreinigungen zu vermeiden;
- die vorherige Anordnung der Frucht so, dass als Zielbereiche jene Teile der Frucht geboten werden welche sich für die Markierung eignen wobei z.B. eine Markierung im Bereich der Stengel- und der Kelchgrube sowie in den anliegenden Bereichen vermieden wird;
- die Behandlung des markierten Bereiches sofort nach der Durchführung der Markierung um diese vor der Wirkung von schädlichen Mikroorganismen zu schützen und eine verstärkte Ausdünstung und/oder eine Oxydation an dieser Stelle zu vermeiden.

Erfindungsgemäß erfolgt die Markierung aller oder eines Teiles der Früchte auf "individuelle" Weise nachdem diese die Station oder die Stationen für die Erhebung der Parameter für die Bestimmung der Größe und der Qualität der Früchte durchlaufen haben. Auf den fortschrittlichen Sortiermaschinen werden heutzutage, aufgrund Eingabe einiger Daten betreffend die Sorte, das Qualitätsniveau und die Größen welche zu berücksichtigen sind, "individuelle" Erhebungen betreffend die Ausmaße, das Gewicht, die Farbe, den Farbanteil und den Zuckergehalt an jeder Frucht durchgeführt. In Bezug auf die Merkmale der Bearbeitungsmaschine ist es möglich den Abstand zwischen den, auf Förderelementen liegenden, durchlaufenden Früchten und deren Geschwindigkeit zu kennen. Die Erfindung schlägt vor, zumindest einen Teil der obgenannten eingegebenen und der erhobenen Daten zu nutzen, um eine möglichst wenig aggressive Markierung, unabhängig von den Unterschieden in den Abmessungen, von der Form, von der Farbe und von der Festigkeit der einzelnen Früchte welche die Markierungsstation durchlaufen, durchzuführen.

Die verschiedenen Arbeitsparameter der Laservorrichtung werden, unmittelbar vor dem Durchlauf einer Frucht unter der Markierungsstation, aufgrund der eingegebenen Richtwerte, z.B. betreffend die Sorte und die Abmaße der Frucht, und aufgrund der an jeder Frucht "individuell" erhobenen Daten, eingestellt. Die Laservorrichtung erfährt also eine Grobeinstellung aufgrund der Sorte und somit aufgrund der Stärke der Schale und der Unregelmäßigkeiten der Oberfläche, um die Markierung mit einer Aggressivität durchzuführen welche sich in ertragbaren Grenzen hält. Zusätzlich werden, aufgrund der Färbung der Frucht, die Leistungswerte, die Impulsintervalle, die Wellenlänge, der Durchmesser des Laserstrahles eingestellt; eine helle (stärker reflektierende) Färbung erfordert höhere Einstellungswerte gegenüber einer dunkleren (stärker absorbierenden) Färbung. Betreffend den Durchmesser der Frucht variiert der Abstand zwischen der zu markierenden Oberfläche und der Strahlenquelle, in Abhängigkeit auf diesen Abstand erfolgt die Schärfeneinstellung des Laserstrahles derart, dass dieser die Markierung innerhalb tragbarer Aggressivität, insbesondere wenn dieser Abstand kleiner ist, durchführt. Die selbe Regelung der Brennschärfe des Laserstrahles erfolgt um die Fortbewegung der Frucht während der Durchführung der Markierung auszugleichen, in diesem Fall wird für die Regelung der Brennschärfe auch die Fördergeschwindigkeit der Frucht berücksichtigt. Eine Verstellung der Brennschärfe erfolgt auch in Abhängigkeit der Krümmung (Wölbung) der zu markierenden "Zieloberfläche".

Natürlich ist die ideale Position des Laserstrahles für die Durchführung der Markierung jene wenn dieser auf das Zentrum der Frucht ausgerichtet ist und in einen Bereich auftrifft welcher weder die Stengel-, bzw. die Kelchgrube, noch die daran anschließenden Bereiche, enthält. Um eine gute Wahrscheinlichkeit zu erreichen, dass die Früchte in einer, für die Markierung günstigen, Position unter der Markierungsstation ankommen, schlägt die Erfindung vor dass diese, bevor sie, z.B. in paarweisen Transportschalen, abgelegt werden, eine Drehung auf einer Rollenbahn, wie sie zur Erhebung des Färbungsgrades bekannt ist, erfahren, so dass sich die Früchte mit der, durch die Stengel- und Kelchgrube verlaufenden, Linie in eine wesentlich horizontale Ebene ausrichten. Die Praxis hat gezeigt dass ca. 80% der Früchte, infolge der vorgenannten Drehung, sich in einer für die Markierung geeigneten Lage befinden. Die Erfindung schließt allerdings nicht aus, dass jene Früchte welche sich mit einer der Grube dem Laserstrahl zugewandt für die Markierung präsentieren, erkannt werden um nicht markiert zu werden. Dies kann dadurch erfolgen, dass z.B. jene Erhebungswerte des Zuckergehaltes genutzt werden welche als "außerhalb der Normwerte" erkannt werden da diese einen Hinweis darstellen, dass die Frucht auf welche sie sich beziehen, während der Erhebung des Wertes des Zuckergehaltes mindestens mit einem Teil einer der Gruben im Wirkungsbereich des Lichtbündels der betreffenden Erhebungsstation befand, oder dass durch eine densitometrische Erhebung der Schattenbereich erfasst wird welcher der Präsenz einer Grube entspricht und welcher durch die seitliche Bestrahlung der Frucht durch eine horizontal ausgerichtetes Lichtbündel erzeugt wird.

Die Praxis hat gezeigt dass, um die Markierung weniger beschädigend durchzuführen, die Markierungslinie durch eine Sequenz von Einbrennpunkten entsteht welche von einem Laserstrahl erzeugt werden welcher an der Zieloberfläche einen bestimmten Durchmesser aufweist weil er nicht scharf eingestellt ist um so die ausgestrahlte Energie auf eine weitere Oberfläche zu verteilen und dadurch weniger aggressiv zu wirken. Diese Einbrennpunkte können gegebenenfalls an widerstandsfähigen Schalen überlagert angeordnet sein, während sie an empfindlicheren Schalen tangent, oder an sehr empfindlichen Schalen unter sich mehr oder weniger beabstandet, angeordnet sein können, wobei sie immerhin als Linie erkennbar sind.

Die Vorbehandlung des zu markierenden Bereiches besteht erfindungsgemäß darin, dass dieser mindestens einem Luftstrahl ausgesetzt wird welcher geeignet ist die Schale zu trocknen und eventuell vorhandene Unreinheiten zu beseitigen. Die Erfindung schließt nicht aus dass, außer der Behandlung mit Luftstrahl, ein mechanisches Säubern, wie z.B. eine Bürstung, durchgeführt wird.

Die Behandlung nach der Markierung sieht erfindungsgemäß das Auftragen einer Schicht oder eines Films einer Versiegelungsmasse vor welche geeignet ist den Markierungsbereich vor Mikroben, Pilzbildung und Oxydierung zu schützen und weiters eine verstärkte Transpiration zu verhindern. Diese Versiegelungsmittel müssen natürlich lebensmittelgerecht, durchsichtig, wasserabweisend, nicht wasserlöslich und schnell trocknend, wie z.B. Wachse oder Lacke sein.

Gemäß einer Weiterentwicklung des Erfindungsgedankens kann der Markierungsbereich auch durch das gezielte Anbringen eines "Labels" der bereits stark verbreiteten Art, geschützt werden. Das Label kann selbst den Schutz des Markierungsbereiches übernehmen oder es kann zusätzlich zur oben genannten schützenden Nachbehandlung angebracht werden.

In Bezug auf die Anordnung der Früchte im Durchlaufbereich unter der Markierungsstation in einer Einzelreihe, in Doppelreihe oder in Mehrfachreihe können diese von einem Lasergerät markiert werden welches für jede einzelne Reihe vorgesehen ist oder von einem einzigen Gerät markiert werden welches, z.B. für zwei nebeneinander verlaufenden Reihen von Früchten vorgesehen ist. In diesem letzten Fall kann die Markierung zuerst an der Frucht einer Reihe und anschließend an der Frucht der angrenzenden Reihe durchgeführt werden oder es ist möglich die Markierung an beiden nebeneinander in zwei Reihen angeordneten Früchten durchzuführen indem abwechselnd die Markierungspunkte an beiden Früchten ausgeführt werden um schließlich an beiden Früchten die vollständigen Markierungen zu erhalten.

Betreffend die Markierungs-Zeichen oder -Symbole können diese erfindungsgemäß in einem elektronischen Speicher ("Bibliothek") vorliegen um über Tastatur die gewünschten Markierungen auswählen zu können; natürlich ist nicht die Möglichkeit ausgeschlossen Markierungs-Symbole mittels Skanner einzugeben oder diese unter Nutzung eines eigenen Graphikprogrammes zu erstellen. Die Auswahl, die Erstellung und die Kontrolle der Markierungs-Symbole kann über den Bildschirm sichtbar gemacht werden.

Erfindungsgemäß ist es weiters möglich die Früchte der selben Bearbeitungs- oder Liefermenge mit zwei oder mehreren unterschiedlichen Markierungssymbolen zu versehen welche gemäß einem vorbestimmten Prozentsatz an Früchten angebracht werden um z.B., außer der Rückverfolgbarkeit des Produzenten, auch die Rückverfolgbarkeit des Betriebes welcher die Verarbeitung und die Verpackung der Früchte durchführt zu bieten. Natürlich kann auch das Markierungssymbol selbst zusammengesetzter oder vielfältiger Art sein um unterschiedliche Daten, wie z.B. die Herkunft, den Verarbeitungs- und Verpackungsbetrieb, usw. ausfindig machen zu können.

Die Vorrichtung für die erfindungsgemäße Durchführung der Markierung an Früchten besteht wesentlich aus:
a- Einrichtungen für die Eingabe und die Speicherung der Daten (Herkunft, Bearbeitungs-/Verpackungsbetrieb, Sorte, Prozentsatz oder Takt der Markierung, usw.) mit automatischer oder manueller Zuordnung der Markierungssymbols und Anzeige am Bildschirm;
b- Erhebungsvorrichtung (Farbe, Färbungsgrad, Durchmesser, Mängel an der Oberfläche, Zuckergrad, Fördergeschwindigkeit, Gewicht, eventuelle Erhebung der Position der Stengel- und/oder Kelchgrube;
c- Vorrichtung für die Vorbehandlung (Trocknung, Reinigung);
d- Vorrichtung zur Ausrichtung der Früchte um jene Flächen der Markierung zu bieten welche dafür geeignet sind um diese homogen auszuführen;
e- Markierungsvorrichtung (Laservorrichtung welche aufgrund verschiedener von den Erhebungsstationen erfassten Parameter und eingegebener und/oder gespeicherter Daten regulierbar ist);
f- Vorrichtung für die Nachbehandlung (Versiegelung des Markierungsbereiches und oder Anbringung eines Labels);
g- Elektronischer Rechner welcher geeignet ist die eingegebenen, die erfassten und die gespeicherten Daten zu bearbeiten um den Markierungslaser so zu steuern dass eine möglichst schonende Markierung durchgeführt wird.

Die Erfindung wird anschließend anhand von Funktionsschemen des erfindungsgemäßen Markierungsverfahrens und anhand konstruktiver Details einer erfindungsgemäßen Markierungsstation welche auf eine bekannte Kalibriermaschine für Äpfel aufgebaut ist und bereits über mehrere Erhebungsstationen verfügt, näher erklärt; die Zeichnungen erfüllen dabei rein erklärenden, nicht begrenzenden Zweck.

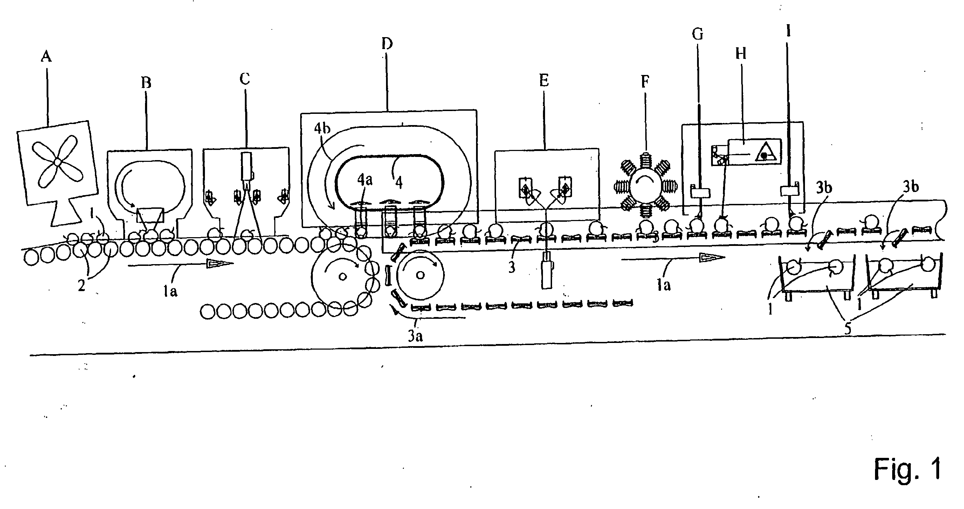

Die Fig. 1 zeigt schematisch jenen Teil einer bekannten Sortiermaschine wo verschiedene Erhebungen durchgeführt werden aufgrund welcher die einzelnen Äpfel klassifiziert und kalibriert werden, die Lasermarkierungsstation ist, zusammen mit der Vorbehandlungsstation (Reinigung und Trocknung) und der Nachbehandlungsstation (Versiegelung), zwischen der Labelmaschine und dem Bereich der Ablage der Äpfel in die verschiedenen Kanäle welche den verschiedenen Kalibern und/oder den verschiedenen Qualitätsklassen entsprechen.

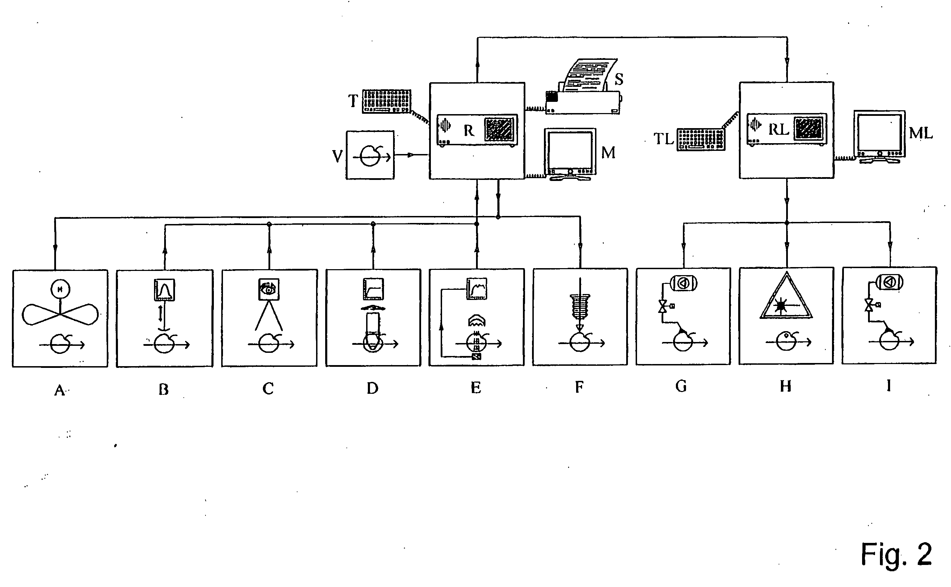

Die Fig. 2 zeigt ein Blockschema welches die Verbindung zwischen den verschiedenen Erhebungsstationen, der Laser-Markierungsstation und der Vor- und Nachbehandlungsstationen mit dem elektronischen Rechner der Sortiermaschine darstellt welcher mit dem spezifischen Rechner der Laser-Markierungsstation verbunden ist, der mit Tastatur für die Eingabe von Daten und/oder Parametern, mit Bildschirm für die Kontrolle der gespeicherten und eingegebenen Daten und mit einem Drucker für die Protokollierung der ausgeführten Arbeitsgängeund der erhobenen und eingegebenen Daten, ausgestattet ist.

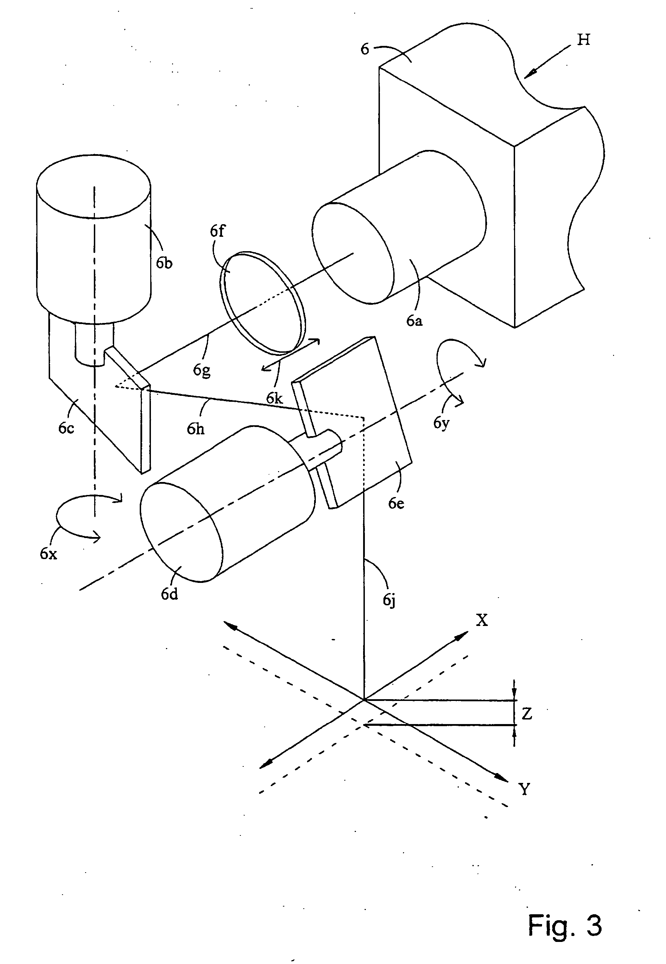

Die Fig. 3 zeigt schematisch den Mechanismus und die Optik für die Ablenkung eines, aus einer Laserquelle austretenden, Laserstrahles um eine Bewegung gemäß zweier zueinander 90° bildender Achsen auf der zu markierenden Zieloberfläche zu erzielen.

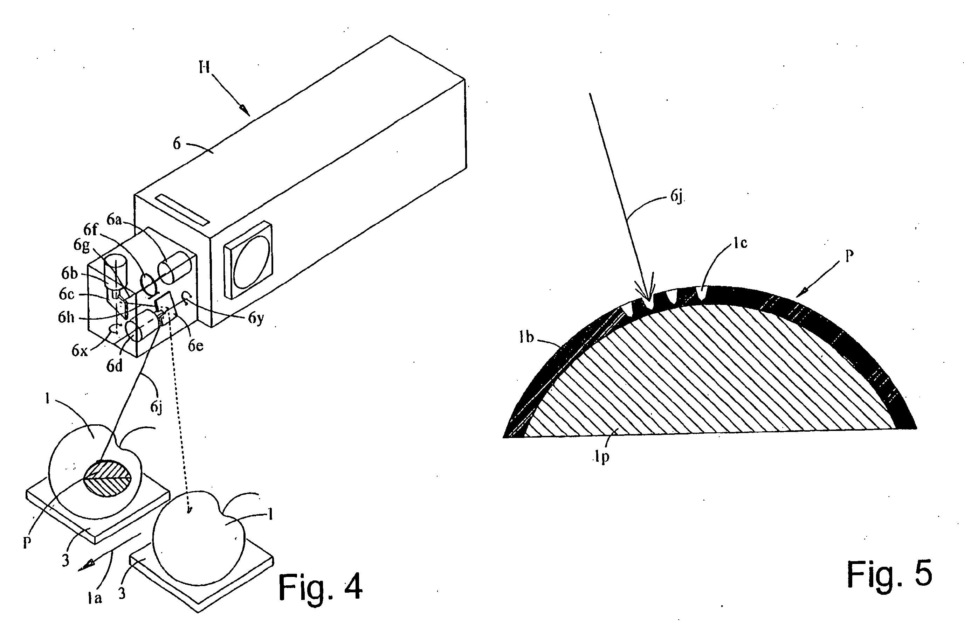

Die Fig. 4 zeigt schematisch in perspektivischer Darstellung die Durchführung der Markierung zweier Äpfel während ihrer Fortbewegung in zwei zueinander parallelen Reihen.

Die Fig. 5 zeigt in vergrößertem Maßstab das in Fig. 4 gekennzeichnete Detail P betreffend den Schnitt durch einen Teil eines Apfels wobei die Schnittfläche senkrecht durch die verschiedenen Markierungspunkte verläuft.

Die Äpfel 1 werden, nach Entnahme aus einem Pufferkanal, unter einer Trockenstation A hinweg, auf einem Rollenbahn 2 einer bekannten Sortiermaschine vorwärtsbewegt 1 a. Anschließend werden die Äpfel unter den bekannten Stationen für die Erhebung der Festigkeit B, die Erhebung des Durchmessers, die Erhebung der Farbe (Färbungsgrades) und die Erhebung eventueller Mängel C, hinwegbewegt. Anschließend ist die Erhebung des Gewichtes D, unter Nutzung der Mechanik einer bekannten Fördervorrichtung 4 mittels Zangen 4a vorgesehen welche synchron mit der Förderbewegung 1 a der Äpfel 1 auf dem Rollenbahn 2 und mit der Bewegung 3a einer Fördervorrichtung bestehend aus paarweise angeordneten und schwenkbaren 3b Tassen 3, läuft. Entlang der Erstreckung der Fördervorrichtung mit Tassen 3 ist die Station für die Erhebung des Zuckergrades E vorgesehen. Die Erhebungen welche von den Stationen B, C, D, E durchgeführt werden erfolgen "individuell" an jedem Apfel, es steht also für jeden Apfel 1 eine individuelle Merkmalstabelle der erhobenen Daten zur Verfügung aufgrund welcher dieser betreffend Qualität und/oder Kaliber klassifiziert wird. Dieses Erhebungsverfahren und die Anordnung der verschiedenen Erhebungsstationen, sind bereits Teil bekannter Sortiermaschinen. Das erfindungsgemäße Laser-Markierungsverfahren kann die von den obgenannten Stationen B, C, D, E erhobenen Daten nutzen, kann diese Messungen durch zusätzliche spezifische Erhebungen, wie z.B. die Erhebung mindestens einer der Gruben entsprechend dem Stengel oder dem Kelch des Apfels und/oder die Erhebung der Krümmung (Wölbung) der Apfeloberfläche (welche auch aus dem erhobenen Durchmesserwert errechenbar ist), integrieren um das Laser-Markierungsverfahren weiter zu verbessern. An den bekannten Sortiermaschinen ist weiters normalerweise eine Station F für die Anbringung der selbstklebenden Labels vorgesehen. Erfindungsgemäß ist, nach den vorgenannten Erhebungsstationen zusammen mit den spezifischen Erhebungsstationen zwecks Verbesserung des Laser-Markierungsverfahrens, und eventuell nach der Station F für die Anbringung der Labels eine Station G für die Trocknung und Reinigung vorgesehen. Die Station G kann aus einer oder aus mehreren Düsen, aus welchen eventuell warme Luftstrahie austreten, und/oder aus einem oder mehreren Bürstvorrichtungen bestehen. Die Erfindung schließt nicht aus dass die Trocknung mittels Ultraschall oder unter Zusammenwirkung mit Ultraschall, infrarotem Licht und/oder Einwirkung von Mikrovibrationen, erfolgt. Nach der Reinigungs- und Trockenstation G wird an dem Apfel 1 die Lasermarkierung durchgeführt indem er unter der Markierungsstation H durchgeführt wird. Anschließend wird der Apfel 1, im Bereich der Markierung, während des Durchlaufes unter der Versiegelungsstation I durch mechanisches Auftragen oder durch Sprühen mit einer Schicht oder einem Films versehen welcher z.B. aus einem Material auf Wachs- oder Lackbasis besteht und schnell trocknet, das Trocknen kann eventuell durch Einwirkung eines Luftstrahles, eventuell zusammen mit der Einwirkung z,B. infraroter Strahlen, beschleunigt werden.
Nach der Markierung werden die Äpfel durch Schwenken 3b der Tassen 3 über jenem Förderkanal 5 abgelegt, welcher jener Klassifizierung entspricht, die sich aus den, entlang der Förderstrecke, durchgeführten und für die Bestimmung der Qualität und/oder des Kalibers geltenden Erhebungen, ergibt.
Erfindungsgemäß kann das Versehen F mit Labels auch nach der Lasermarkierung H erfolgen und eventuell die Versiegelung I ersetzen oder die vorher erfolgte Versiegelung I eventuell überdecken.
Erfindungsgemäß werden, wie die verschiedenen Erhebungen, auch die Reinigung/Trocknung G, die Lasermarkierung H und die Versiegelung 1, ohne Unterbrechung der Förderbewegung 1a der Äpfel 1 entlang den Fördervorrichtungen 2, 4, 3, durchgeführt.

Die Laserstation H besteht erfindungsgemäß aus einer Laserquelle 6, 6a von der Art mit gasförmigem Medium (CO₂), in welchem die schwingungs- und Rotationspegel der Moleküle genutzt werden. Besagte Pegelarten weisen Energien auf welche den Frequenzen im infraroten Feld entsprechen, die Wellenlänge beträgt ca. 10,57 µm und die Ausgangsleitung ist ca. gleich oder kleiner als 50 W. Die Laserquelle 6a ist am Austritt mit einer Linse 6f oder mit einem beweglichen 6k optischem System für das Einstellen der Brennschärfe des austretenden Strahles 6g, ausgestattet. Dieser austretende Strahl 6g wird anschließend mit, innerhalb einer horizontalen Ebene, veränderbarem Winkel, durch einen ersten, gemäß einer vertikalen Achse durch einen (galvanometrischen) Motor 6b geschwenkten 6x, Spiegel 6c reflektiert 6h. Der horizontal reflektierte Strahl 6h wird anschließend mit, innerhalb einer vertikalen Ebene, veränderbarem Winkel, durch einen zweiten Spiegel 6e reflektiert 6j welcher durch einen (galvanometrischen) Motor 6d, gemäß einer horizontalen Achse geschwenkt 6y wird. Dieser zweimal reflektierte Strahl 6j welcher die Markierung an der Zieloberfläche, also auf der Schale 1 b des Apfels 1, durchführt, führte an der zu markierenden Oberfläche, durch die Schwenkung 6x des Spiegels 6c, eine Bewegung gemäß der X-Achse aus, während er, durch die Schwenkung 6y des Spiegels 6e, eine Bewegung gemäß der Y-Achse ausführt. Die Anpassung des markierenden Laserstrahles 6j gemäß der Z-Achse (Tiefe) kann elektronisch in der Laserquelle 6, 6a erfolgen und/oder durch Einwirkung 6k auf die Linse oder auf die Optik 6f erfolgen. Laserquellen der oben beschriebenen Art mit einstellbarer Optik, Brennschärfe und Reflexion sind bekannt für die Markierung von Lebensmitteln mit widerstandsfähiger "Zieloberfläche" welche nicht essbar ist, wobei die Einstellung der Intensität, der Frequenz der Impulse, der Überlagerung der Markierungspunkte und der Brennschärfe des Laserstrahles ausschließlich für das Erzeugen farblicher Unterschiede (hellbraun - dunkelbraun - schwarz) an der Markierung genutzt wird.

Für die erfindungsgemäße Markierung von Früchten hingegen erfährt der Laserstrahl eine Grobeinstellung aufgrund der in einen Rechner RT mittels Tastatur TL oder mittels Balkenkod-Lesegerät eingegebenen Daten welche geeignet ist um eine sichtbare, oder nicht mit freiem Auge sichtbare, Markierung so durchzuführen, dass die folgende Haltbarkeit der Früchte nicht gefährdet ist. Um die Markierung gemäß den, der Erfindung zugrunde liegenden, Zielen zu optimieren, können außer den Daten, z.B. betreffend die Sorte des Apfels, das Produktionsgebiet, den Verarbeitungs-Nerpackungsbetrieb, usw., alle oder Teil der für die Sortierung und Klassifizierung erhobenen Daten B, C, D, E und eventuell zusätzlich erhobene Daten (Position der Stengel-/Kelchgrube, Wölbung der Apfeloberfläche) genutzt werden.

In der Praxis wird der Überlagerungsgrad der Markierungspunkte, bzw. der Abstand zwischen den Markierungspunkten, durch die vorherige Grobeinstellung basierend auf die Sorte des zu markierenden Apfels und je nachdem ob eine mit freiem Auge lesbare oder eine nicht mit freiem Auge lesbare Markierung erreicht werden soll; für eine Sorte mit dicker, rauer, hellfarbiger Schale wird die Einstellung auf einem stärkeren Leistungsniveau erfolgen als für eine Sorte mit dünner, glatter, dunkelfarbiger Schale, durch eine Einstellung auf einem weiter vermindertem Leistungsniveau wird eine Markierung erzielt welche mit freiem Auge nicht lesbar ist. Anschließend wird die Aggressivität des Laserstrahles 6j, bzw. wird die Laserquelle 6, 6a, zusammen mit der entsprechenden Optik 6f, 6c, 6e derart, innerhalb dem Bereich der vorgenannten Grobeinstellung, aufgrund der Parameter Festigkeit B, Durchmesser und Färbungsgrad C, Gewicht D und Zuckergrad E, variiert. Wobei weiters zu berücksichtigen ist, dass die Wärmeleitfähigkeit des Apfels im Verhältnis zur Härte und Festigkeit des Fruchtfleisches und insbesondere zur Dichte der Masse des Apfels steht, welche sich aus den Erhebungen Gewicht/Durchmesser ergibt.

Die helle Farbe reflektiert zumindest teilweise das Licht und die Wärme während die dunklere Farbe den Großteil der vom Laserstrahl auf der zu markierenden Oberfläche entwickelten Wärme aufnimmt, für die Markierung eines Apfels mit dunkelroter Färbung muss also der Laserstrahl so eingestellt werden, dass er weniger aggressiv ist.

Ein Apfel mit großem Durchmesser bewirkt, dass die Zieloberfläche näher an der Laserquelle liegt als jene eines Apfels mit kleinerem Durchmesser, der Laserstrahl wird also so eingestellt, dass er weniger aggressiv als für einen Apfel mit kleinerem Durchmesser ist. Die Zieloberfläche eines Apfels mit großem Durchmesser bietet eine weniger gewölbte, also eine flachere Oberfläche in Bezug auf jener eines Apfels mit kleinerem Durchmesser, der Laserstrahl wird also während der Ausführung der Markierung, sei es aufgrund der Änderung des Abstandes wegen der mehr oder weniger ausgeprägten Wölbung, als auch aufgrund der Änderung der Position des Apfels wegen des Durchlaufes 1 a unter der Markierungsstation H, geregelt. Natürlich wird die Bewegung X-Y des Strahles 6j derart sein, dass während der Förderbewegung 1 a des Apfels, der Strahl 6j so ausgerichtet wird dass er auf das Zentrum des Apfels zielt; so dass der Strahl 6j möglichst senkrecht auf die Zieloberfläche auftrifft.

Die Markierung kann an allen Äpfeln 1 durchgeführt werden und eventuell kann eine einzige Markierungsstation H die Markierung an den Äpfeln 1 durchführen welche paarweise gemäß paralleler Förderlinien bewegt werden, oder es kann eine spezifische Markierungsstation für jede Förderlinie der Äpfel 1 vorgesehen sein.

Die Veränderung des Gewebes am markierten Apfel 1 hängt von der Aggressivität des Strahles 6j ab, diese wird wesentlich von der abgegebenen Energie, von der Lichtfrequenz, von den Pulsationsintervallen und von der Markierungsgeometrie bestimmt, wobei letztere wesentlich vom Überdeckungsgrad der Markierungspunkte 1 c, bzw. vom Abstand zwischen diesen Punkten 1 c, und vom Durchmesser des Markierungsstrahles 6j an der Zieloberfläche, abhängig ist. Der Rechner RL wird also, aufgrund der gespeicherten Daten, der eingegebenen Daten TL, der erhobenen Daten B, C, D, E und der Daten V welche auf die Merkmale der Sortiermaschine bezogen sind, die Emission des Markierungsstrahles 6j so regeln, dass dieser die Zieloberfläche mit einer, von dem zu markierenden Apfel 1, tolerierbaren Aggressivität trifft und, abgesehen von der Markierungsgraphik, den Überdeckungsgrad, bzw. den Abstand zwischen den Markierungspunkten und den Durchmesser des Strahles an der Zieloberfläche bestimmen.

Erfindungsgemäß kann mittels Tastatur TL der prozentuelle Anteil der zu markierenden Äpfel 1 eingegeben werden und/oder eine Auswahl zwischen den Äpfeln getroffen werden wobei eventuell nur jene markiert werden welche bestimmte Merkmale betreffend z.B. den Durchmesser, den Färbungsgrad aufweisen. Diese Auswahl kann aufgrund Qualitätskriterien oder ästhetischer Merkmale des Apfels getroffen werden um nur Äpfel mit großem Durchmesser und/oder mit hohem Färbungsgrad oder aufgrund von Haltbarkeitskriterien, solche welche weniger einer zu starken Veränderung ausgesetzt sind, zu markieren.

Erfindungsgemäß kann das Lesen der, nicht mit freiem Auge lesbaren, Markierung durch Einwirken von Licht mit selektionierter Wellenlänge und/oder Farbe oder von polarisiertem Licht in Kombination mit bekannten optischen Vergrößerungsvorrichtungen erleichtert werden.

## Patentansprüche

1. Markierungsverfahren für Obst (1) mittels Laserstrahl welcher von eine mit Linse (6f) oder mit einer optischen Einheit für die Einstellung der Brennschärfe und mit zwei beweglichen optischen Einheiten (6b, 6c6d, 6e) versehne CO2-Laserquelle (6, 6a) ausgestrahlt wird, wobei diese Laserquelle (6, 6a), was die abgestrahlte Energie, die Pulsintervalle, den Durchmesser des Markierungsstrahles (6j) auf der Zieloberfläche und die Markierungsrichtung gemäß der X-Y Achsen auf der Zielebene betrifft, einstellbar ist, **dadurch gekennzeichnet, dass** in den Bearbeitungsdurchlauf des Obstes (1) an einer Sortiermaschine, an einer Verpackungsmaschine oder an einer spezifischen, eventuell mit Labelmaschine (F) ausgestatteten, Markierungsmaschine mehrere Erhebungsstationen (B, C, D, E) eingereiht sind die foramic wic Festigkeit (B) des Fruchtfleisches, das Durchmesser, die Färbung und eventuelle Mängel (C) an der Fruchtschale, das Gewicht (D) und das Zuckergehalt erheben, und dass die in den Bearbeitungsablauf eingereihte Laserstation (H), mindestens einen Teil de für die Größen- und die Qualitätsauswahl des Obstes (1) von den Stationen (B, C, D, E) erhobenen und von einem Rechner (RL) bearbeiteten Parameter nutzt, um die Einstellung de über dem Durchlauf des Obstes angeordneten Laserquelle (6a) und der zugeordneten Optik (6f; 6b, 6c; 6d, 6e) zu bestimmen, dass vor der Markierung des Obstes (1) dessen Zieloberfläche einem Reinigungs-/Trocknungsvorgang unterzogen wird, und dass nach der Markierung der markierte Bereich an der selben Frucht (1) einem Versiegelungsvorgang unterzogen wird.

2. Markierungsverfahren gemäß Anspruch 1, **dadurch gekennzeichnet, dass** die Einstellung der Laserquelle (6, 6a) und deren Optik (6f; 6b, 6c; 6d, 6e), außer aufgrund der von den Stationen (B, C, D, E) erhobenen Parametern der Bearbeitungsmaschine, aufgrund der durch eine spezifische Station erhobene Position von mindestens einer der Gruben an der Frucht (1) welche dem Stengel oder dem Kelch entsprechen, erfolgt und dass das Obst eine bekannte Vorrichtung durchläuft welche geeignet ist die einzelnen Früchte (1) derart zu positionieren dass diese sich mit einer Zieloberfläche präsentieren welche nicht die Stengel- oder Kelchgrube oder die daran angrenzenden Bereiche umfasst.

3. Markierungsverfahren gemäß Anspruch 1, **dadurch gekennzeichnet, dass** die Einstellung der Laserquelle (6a) und deren Optik (6f; 6b, 6c; 6d, 6e), außer aufgrund der von den Stationen (B, C, D, E) der Bearbeitungsmaschine erhobenen Parameter, aufgrund der Wölbung der Zieloberfläche welche mittels einer spezifischen Erhebungsstation gemessen wird oder von einem Rechner (R) aufgrund der Erhebung (C) des Durchmessers der Frucht (1) errechnet wird, erfolgt.

4. Markierungsverfahren gemäß Anspruch 1, **dadurch gekennzeichnet, dass** die Einstellung der Laserquelle (6a) und deren Optik (6f; 6b, 6c; 6d, 6e), außer aufgrund der von den Stationen (B, C, D, E) der Bearbeitungsmaschine erhobenen Parameter, aufgrund von in einen Rechner (RL) mittels Tastatur (TL) oder Kodexlesegerät eingegebenen Daten und aufgrund gespeicherter Parameter oder Daten und/oder aufgrund der Lesbarkeit und Ausgeprägtheit der Markierung, welche von mehr ausgeprägter mit freiem Auge lesbarer Art oder von weniger ausgeprägter nur mit Hilfe spezifischer Instrumente lesbarer Art, erfolgen kann.

5. Markierungsverfahren gemäß Anspruch 1, **dadurch gekennzeichnet, dass** die Einstellung der Laserquelle (6a) und deren Optik (6f; 6b, 6c; 6d, 6e), außer aufgrund der von den Stationen (B, C, D, E) der Bearbeitungsmaschine erhobenen Parameter, aufgrund der Funktionsparameter (V), wie Fördergeschwindigkeit (1 a) der Früchte (1), Abstand zwischen den Förderreihen der Früchte (1), Abstand zwischen den Früchten (1) der selben Förderreihe, welche an der Sortiermaschine erhoben werden, erfolgt.

6. Markierungsverfahren gemäß Anspruch 1, **dadurch gekennzeichnet, dass** die Versiegelung (I) des markierten Bereiches durch Anbringung einer Schicht oder eines Films aus Wachs, Lack oder aus einem anderen lebensmittelechtem Produkt erfolgt.

7. Markierungsverfahren gemäß Anspruch 1, **dadurch gekennzeichnet, dass** die Versiegelung des markierten Bereiches durch Anbringung eines selbstklebenden Labels erfolgt.

8. Markierungsverfahren gemäß Anspruch 1, **dadurch gekennzeichnet, dass** die Versiegelung des markierten Bereiches durch vorheriger Anbringung einer Schicht oder eines Films aus Wachs, Lack oder aus einem anderen lebensmittelechtem Produkt und durch folgender Anbringung eines selbstklebenden Labels erfolgt.

9. Markierungsverfahren gemäß Anspruch 1, **dadurch gekennzeichnet dass** für jede Förderreihe der Früchte (1) eine Laser-Markierungsstation (H) vorgesehen ist.

10. Markierungsverfahren gemäß Anspruch 1, **dadurch gekennzeichnet dass** eine einzige Markierungsstation (H) für zwei parallele Förderreihen der Früchte (1) vorgesehen ist und dass die Durchführung der Markierung abwechselnd an den Früchten der beiden Förderreihen erfolgt, wobei jeweils die gesamte Markierung an einer Frucht einer Reihe und anschließend jene an der entsprechenden Frucht der anderen Reihe erfolgt oder wobei einzelne Markierungspunkte oder Gruppen von Markierungspunkten abwechselnd an den Früchten der beiden parallelen Förderreihen durchgeführt werden.

11. Markierungsverfahren gemäß Anspruch 1, **dadurch gekennzeichnet dass** die Grundeinstellung der Laserquelle (6, 6a) durch die Eingabe von Daten über die Tastatur (TL) mittels Kodexlesegerät oder durch Aufrufen von Parametern aus dem Speicher und aufgrund der Parameter (V) betreffend die Funktionsmerkmale der Bearbeitungsmaschine erfolgt und dass diese eine weitere Einstellung aufgrund der, an jeder einzelnen Frucht (1), mittels der Erhebungsstationen (B, C, D, E) der Sortierungsmaschine und mittels eventueller spezifischer Erhebungsstationen, individuell erhobenen Parameter, erfährt.

12. Markierungsverfahren gemäß Anspruch 1, **dadurch gekennzeichnet, dass** die Markierung, zusammen mit der Durchführung der Reinigung/Trocknung (G) und der Versiegelung (I), an der Bearbeitungsmaschine vor der Ablenkung der Früchte (1) aufgrund Ihrer Größe und/oder ihrer Qualitätsklasse oder vor der Verpackung der Früchte oder an einer folgenden Bearbeitungsmaschine für die Früchte erfolgt.

13. Markierungsverfahren gemäß den Ansprüchen 1 und 4, **dadurch gekennzeichnet, dass** das Lesen der, nicht mit freiem Auge lesbaren, Markierung unter Einsatz von Licht mit selektionierter Wellenlänge und Farbe und/oder von polarisiertem Licht, mit oder ohne Hilfe von optischen Vergrößerungsvorrichtungen erfolgt.

14. Markierungsvorrichtung zum Durchführen des Verfahren gemäß einem der Ansprüche 1 bis 12 , bestehend aus einer CO₂-Laserquelle mit zwei beweglichen optischen Einheiten wobei die abgestrahlte Energie, die Pulsintervalle, der Durchmesser des Markierungsstrahles auf der Zielebene und die Markierungsrichtung gemäß der X-Y Achsen einstellbar ist und **gekennzeichnet** mit einer Einrichtung für die Eingabe und die Speicherung der Daten betreffend Herkunft, Bearbeitungs-/Verpackungsbetrieb, Sorte, Prozentsatz oder Takt der Markierung mit automatischer oder manueller Zuordnung des Markensymbols und Anzeige am Bildschirm; - aus einer Erhebungsvorrichtung für Farbe, Färbungsgrad, Durchmesser, Mängel an der Oberfläche, Zuckergrad, Fördergeschwindigkeit, Gewicht, Position der Stengel- und/oder Kelchgrube; - aus einer Vorrichtung für die Trocknung/ Reinigung - Vorbehandlung der Zieloberfläche und aus einer Vorrichtung für die Nachbehandlung des Markierungsbereiches, wobei die Laser-Markierungsstation (H) zusammen mit der Vorrichtung für die Reinigung/Trocknung (G) und mit der Versiegelungsstation (I) und eventueller Labelmaschine (F) mit einem elektronischen Rechner (RL) mit Speicher, Bildschirm (M) und Drucker (S) verbunden ist, an welchen alle oder ein Teil der Erhebungsstationen (B, C, D, E) der Bearbeitungsmaschine, der Erhebungsstationen (V) für die Funktionsmerkmale der Bearbeitungsmaschine und der spezifischen, vom Verfahren vorgesehenen, Erhebungsstationen angeschlossen sind.

15. Markierungsvorrichtung gemäß Anspruch 14, **dadurch gekennzeichnet, dass** im Fall der Markierung von Früchten (1) welche gemäß zweier paralleler Förderreihen ausgerichtet sind, mittels einziger Markierungsstation (H), die letzte bewegliche optische Gruppe (6d, 6e) über welche der Laserstrahl geleitet wird bevor er die Zieloberfläche an der zu markierenden Frucht (1) trifft, außer den Bewegungen welche die Grafik der Markierung erzeugen, auch jene Bewegungen ausführt welche die jeweilige Ablenkung zu den Früchten (1) bewirkt, welche auf den beiden parallelen Förderreihen bewegt (1a) werden.

16. Markierungsvorrichtung gemäß Anspruch 14, **dadurch gekennzeichnet dass** die Reinigungs-/Trocknungsstation (G) mindestens eine Düse für Druckluft aufweist.

17. Markierungsvorrichtung gemäß Anspruch 14, **dadurch gekennzeichnet, dass** die Reinigungs-/Trocknungsstation (G) mindestens eine Bürstvorrichtung aufweist.

18. Markierungsvorrichtung gemäß Anspruch 14, **dadurch gekennzeichnet, dass** die Reinigungs-lTrocknungsstation (G) mindestens eine Düse für Druckluft, welche mit einer Bürstvorrichtung zusammenarbeitet, aufweist.

19. Markierungsvorrichtung gemäß Anspruch 14, **dadurch gekennzeichnet, dass** an der Reinigungs-/Trocknungsstation (G) das Trocknen mittels Ultraschall und/oder infrarotes Licht erreicht oder unterstützt wird.

20. Markierungsvorrichtung gemäß Anspruch 14, **dadurch gekennzeichnet dass** die Versiegelungsstation (I) aus mindestens einem Sprüher für Wachs, Lack oder einem anderen versiegelnden, lebensmittelechtem Produkt besteht nach welchem eventuell eine Düse für Druckluft und/oder eine Lichtquelle für infrarotes Licht angeordnet ist.

21. Markierungsvorrichtung gemäß Anspruch 14, **dadurch gekennzeichnet, dass** die Versiegelungsstation (I) aus einer Labelmaschine besteht.

## Claims

1. Marking methods for fruit (1) by means of a laser beam which is emitted from a CO₂ laser source (6, 6a) which is provided with a lens (6f) or with an optical unit for adjustment of the focal clarity and having two moving optical units (6b, 6c, 6d, 6e), with this laser source (6, 6a) being adjustable in terms of the emitted energy, the pulse intervals, the diameter of the marking beam (6j) on the target surface and the marking direction on the basis of the X-Y axes on the target plane, **characterized in that** a plurality of determination stations (B, C, D, E) are arranged in one or more rows on a sorting machine, on a packaging machine or on a specific marking machine, which may be equipped with a labelling machine (F), in the processing run of the fruit (1), determining parameters such as the strength (B) of the fruit flesh, the diameter, the colour and possible defects (C) on the fruit skin, the weight (D) and the sugar content, and **in that** the laser station (H) which is arranged in a row in the process run uses some of the parameters which are processed by a computer (RL) and are raised for the size and/or quality selection of the fruit (1) by the stations (B, C, D, E) in order to determine the adjustment of the laser source (6a), which is arranged above the path of the fruit and to adjust the associated optics (6f; 6b, 6c; 6d, 6e), **in that**, before the marking of the fruit (1), its target surface is subjected to a cleaning/drying process, and **in that** after the marking, the marked area on the same fruit (1) is subjected to a sealing process.

2. Marking method according to Claim 1, **characterized in that** the adjustment of the laser source (6, 6a) and of its optics (6f; 6b, 6c; 6d, 6e) is carried out not only on the basis of the parameters of the processing machine raised by the stations (B, C, D, E) but also on the basis of the position, raised by a specific station, of at least one of the pits on the fruit (1) which correspond to the stalk or the sepal, and **in that** the fruit passes through a known apparatus which is suitable for positioning the individual fruit (1) such that this is presented with a target surface which does not include the stalk or sepal pit or the areas adjacent thereto.

3. Marking method according to Claim 1, **characterized in that** the adjustment of the laser source (6a) and of its optics (6f; 6b, 6c; 6d, 6e) is carried out not only on the basis of the parameters which are raised by the stations (B, C, D, E) of the processing machine but also on the basis of the curvature of the target surface, which is measured by means of a specific determination station or is calculated by a computer (R) on the basis of the determination (C) of the diameter of the fruit (1).

4. Marking method according to Claim 1, **characterized in that** the adjustment of the laser source (6a) and of its optics (6f; 6b, 6c; 6d, 6e) can be carried out not only on the basis of the parameters determined by the stations (B, C, D, E) of the processing machine but also on the basis of the data entered in a computer (RL) by means of a keyboard (TL) or a codex reader and on the basis of stored parameters of data and/or on the basis of the legibility and distinctiveness of the marking which is of a more pronounced type which is legible with the naked eye or of a less pronounced type which is legible only with the aid of specific instruments.

5. Marking method according to Claim 1, **characterized in that** the adjustment of the laser source (6a) and of its optics (6f;, 6b, 6c; 6d, 6e) is carried out not only on the basis of the parameters determined by the stations (B, C, D, E) of the processing machine but also on the basis of the function parameters (V) such as the feed rate (1a) of the fruits (1), the distance between the feed rows of the fruits (1), the distance between the fruits (1) in the same feed row which are determined on the sorting machine.

6. Marking method according to Claim 1, **characterized in that** the sealing (I) of the marked area is achieved by application of a layer or of a film composed of wax, lacquer or some other product which is compatible with foodstuffs.

7. Marking method according to Claim 1, **characterized in that** the sealing of the marked area is carried out by application of a self-adhesive label.

8. Marking method according to Claim 1, **characterized in that** the sealing of the marked area is carried out by previous application of a layer or of a film of wax, lacquer or of some other product which is compatible with foodstuffs, and by subsequent application of a self-adhesive label.

9. Marking method according to Claim 1, **characterized in that** a laser marking station (H) is provided for each feed row of the fruits (1).

10. Marking method according to Claim 1, **characterized in that** a single marking station (H) is provided for two parallel feed rows of the fruits (1), and **in that** the marking is carried out alternately on the fruits in the two feed rows, with the entire marking on the fruit in one row being carried out in each case, followed by that on the corresponding fruit in the other row, or with individual marking points or groups of marking points being carried out alternately on the fruits in the two parallel feed rows.

11. Marking method according to Claim 1, **characterized in that** the basic setting of the laser source (6, 6a) is produced by inputting data via the keyboard (TL) by means of a codex reader or by calling of parameters from the memory and on the basis of the parameters (V) relating to the functional features of the processing machine, and **in that** this is subject to a further adjustment on the basis of the individual determined parameters on each individual fruit (1), by means of the determination stations (B, C, D, E) of the sorting machine and by means of any specific determination stations.

12. Marking method according to Claim 1, **characterized in that** the marking, together with the processes of carrying out the cleaning/drying (G) and the sealing (I), are carried out on the processing machine before the deflection of the fruits (1) on the basis of their size and/or quality class or before the packaging of the fruits, or at a following processing machine for the fruits.

13. Marking method according to Claims 1 and 4,
**characterized in that** the reading of the marking that is not legible with the naked eye is carried out using light at a selected wavelength and with a selected colour and/or using polarized light, with or without the aid of optical magnification apparatuses.

14. Marking apparatus for carrying out the method according to one of Claims 1 to 12, comprising a CO₂ laser source with two moving optical units, in which case the emitted energy, the pulse intervals, the diameter of the marking beam on the target plane and the marking direction are adjustable on the basis of the X-Y axes, **characterized by** a device for inputting and storing the data relating to the origin, processing/packaging operation, types, percentage or clock of the marking with automatic or manual association of the mark symbol and indication on the screen; - from an determination apparatus for colour, colour degree, diameter, defects on the surface, sugar level, feed rate, weight, position of the stalk and/or sepal pits; - from an apparatus for the prior treatment of drying/cleaning of the target surface and from an apparatus for subsequent treatment of the marking area, with the laser marking station (H) together with the apparatus for cleaning/drying (G) and with the sealing station (I) and possible labelling machine (F) being connected to an electronic computer (RL) with a memory, screen (M) and printer (S) to which all or some of the determination stations (B, C, D, E) of the processing machine, of the determination stations (V) for the function features of the processing machine and the specific determination stations which are provided by the method are connected.

15. Marking apparatus according to Claim 14, **characterized in that,** in the event of marking of fruits (1) which are aligned on the basis of two parallel feed rows, by means of a single marking station (H), the last moving optical group (6d, 6e) over which the laser beam is passed before it strikes the target surface on the fruit (1) to be marked, carries out not only the movements which produce the graphics of the marking but also those movements which result in the respective deflection of the fruits (1) which are moved on the two parallel feed rows (1a).

16. Marking apparatus according to Claim 14, **characterized in that** the cleaning/drying station (G) has at least one nozzle for compressed air.

17. Marking apparatus according to Claim 14, **characterized in that** the cleaning/drying station (G) has at least one brushing apparatus.

18. Marking apparatus according to Claim 14, **characterized in that** the cleaning/drying station (G) has at least one nozzle for compressed air, which interacts with a brushing apparatus.

19. Marking apparatus according to Claim 14, **characterized in that** the drying process at the cleaning/drying station (G) is achieved or assisted by means of ultrasound and/or infrared light.

20. Marking apparatus according to Claim 14, **characterized in that** the sealing station (I) comprises at least one sprayer for wax, lacquer or some other sealing product which is compatible with foodstuffs, following which a nozzle may be arranged for compressed air, and/or a light source for infrared light.

21. Marking apparatus according to Claim 14, **characterized in that** the sealing station (I) comprises a labelling machine.

## Revendications

1. Procédé de marquage de fruits (1) au moyen d'un rayon laser, émis d'une source laser CO₂ (6, 6a) munie d'une lentille (6f) ou d'une unité optique, pour le réglage de la netteté optique, et avec deux unités optiques (6b, 6c, 6d, 6e) mobiles, cette source laser (6, 6a) étant réglable, pour ce qui concerne l'énergie irradiée, l'intervalle entre impulsions, le diamètre du rayon de marquage (6j) sur la surface cible et la direction de marquage, selon les axes X-Y sur le plan cible, **caractérisé en ce que,** dans le passage en travail du fruit (1) sur une machine de tri, sur une machine d'emballage ou sur une machine de marquage spécifique, éventuellement équipée d'une machine d'étiquetage (F), plusieurs postes de relevé (B, C, D, E) sont installés en rangée, relevant des paramètres, tels que la résistance (B) de la chair du fruit, le diamètre, la coloration et les éventuels défauts (C) sur la peau ou écorce du fruit, le poids (D) et la teneur en sucre, et **en ce que** le poste laser (H), installé dans le déroulement du travail, utilise au moins une partie des paramètres relevés par les postes (B, C, D, E), pour la sélection de la grosseur et de la qualité du fruit (1), et traités par un ordinateur (RL) pour déterminer le réglage de la source laser (6a) disposée sur le chemin du fruit, et de l'optique (6f ; 6b, 6c ; 6d, 6e) associée, **en ce que**, avant le marquage du fruit (1), sa surface cible est soumise à un processus de nettoyage/séchage et, **en ce que**, après le marquage de la zone marquée, un processus de scellement est effectué sur le même fruit (1).

2. Procédé de marquage selon la revendication 1, **caractérisé en ce que** le réglage de la source laser (6a) et de son optique (6f ; 6b, 6c ; 6d, 6e) est effectué, outre du fait des paramètres relevés par les postes (B, C, D, E) de la machine de travail, du fait de la position relevée par un poste spécifique, d'au moins l'une des marques en creux sur le fruit (1), qui correspondent à la queue ou au calice, et **en ce que** le fruit passe par un dispositif connu, convenant pour positionner les différents fruits (1), de manière que ceux-ci se présentent avec une surface cible ne comprenant pas la marque en creux de la queue ou du calice ou les zones leur étant limitrophes.

3. Procédé de marquage selon la revendication 1, **caractérisé en ce que** le réglage de la source laser (6a) et de son optique (6f ; 6b, 6c ; 6d, 6e) est effectué, outre du fait des paramètres relevés par les postes (B, C, D, E) de la machine de travail, du fait du bombement de la surface cible, mesuré au moyen d'un poste de relevé spécifique ou calculé par un ordinateur (R), d'après le relevé (C) du diamètre du fruit (1).

4. Procédé de marquage selon la revendication 1, **caractérisé en ce que** le réglage de la source laser (6a) et de son optique (6f ; 6b, 6c ; 6d, 6e) peut être effectué, outre du fait des paramètres, relevés par les postes (B, C, D, E) de la machine de travail, du fait de données introduites dans un ordinateur (RL) au moyen d'un clavier (TL) ou d'un appareil de lecture de code, et d'après des paramètres ou des données mémorisées, et/ou d'après la lisibilité et l'aspect prononcé du marquage, qui peut être d'un type plus accentué, lisible à l'oeil nu, ou d'un type moins accentué, lisible seulement à l'aide d'instruments spécifiques.

5. Procédé de marquage selon la revendication 1, **caractérisé en ce que** le réglage de la source laser (6a) et de son optique (6f ; 6b, 6c ; 6d, 6e) est effectué, outre du fait des paramètres, relevés par les postes (B, C, D, E) de la machine de travail, du fait des paramètres fonctionnels (V), tel que la vitesse de transfert (1a) des fruits (1), l'espacement entre les rangées de transfert des fruits (1), l'espacement entre les fruits (1) de la même rangée de transfert, relevés sur le poste de tri.

6. Procédé de marquage selon la revendication 1, **caractérisé en ce que** le scellement (I) de la zone marquée est effectué par application d'une couche ou d'un film en cire, vernis ou en un autre produit qui soit authentiquement un produit alimentaire.

7. Procédé de marquage selon la revendication 1, **caractérisé en ce que** le scellement de la zone marquée est effectué par application d'une étiquette autoadhésive.

8. Procédé de marquage selon la revendication 1, **caractérisé en ce que** le scellement de la zone marquée est effectué par application préalable d'une couche ou d'un film en cire, vernis ou en autre produit qui soit authentiquement un produit alimentaire, et par application subséquente d'une étiquette autoadhésive.

9. Procédé de marquage selon la revendication 1, **caractérisé en ce qu'**un poste de marquage au laser (H) est prévu pour chaque rangée de transfert des fruits (1).

10. Procédé de marquage selon la revendication 1, **caractérisé en ce qu'**un poste de marquage au laser (H) unique est prévu pour deux rangées de transfert parallèles des fruits (1), et **en ce que** la mise en oeuvre du marquage est effectuée alternativement sur les fruits des deux rangées de transfert, chaque fois le marquage global étant effectué sur un fruit d'une rangée et, ensuite, sur le fruit correspondant de l'autre rangée, et des points de marquage individuels, ou des groupes de points de marquage, étant appliqués alternativement sur les fruits des deux rangées de transfert parallèles.

11. Procédé de marquage selon la revendication 1, **caractérisé en ce que** le réglage de base de la source laser (6, 6a) est effectué par introduction de données, par l'intermédiaire du clavier (TL), au moyen d'un appareil de lecture de code, ou par interrogation de paramètres issus de la mémoire et, du fait des paramètres (V) concernant les caractéristiques fonctionnelles des la machine de travail, et **en ce que** celui-ci subit un autre réglage, du fait des paramètres relevés individuellement, sur chaque fruit (1) individuel, au moyen des postes de relevé (B, C, D, E) de la machine de tri et au moyen de postes de relevé spécifiques éventuels.

12. Procédé de marquage selon la revendication 1, **caractérisé en ce que** le marquage, conjointement avec la mise en oeuvre du nettoyage/séchage (G) et du scellement (I), est effectué sur la machine de travail, avant le dévoiement des fruits (1) d'après leur grosseur et/ou leur classe de qualité, ou avant l'emballage des fruits ou sur une machine de travail aval, pour les fruits.

13. Procédé de marquage selon les revendications 1 et 4, **caractérisé en ce que** la lecture du marquage, non lisible à l'oeil nu, est effectuée en utilisant de la lumière à longueur d'onde et couleur sélectionnées, et/ou en utilisant de la lumière polarisée, avec ou sans l'aide de dispositifs d'agrandissement optiques.

14. Dispositif de marquage, pour mettre en oeuvre le procédé selon l'une des revendications 1 à 12, composé d'une source laser CO₂ comprenant deux unités optiques mobiles, l'énergie irradiée, l'intervalle entre impulsions, le diamètre du rayon de marquage sur le plan cible et la direction de marquage, selon les axes X-Y, étant réglables, et
**caractérisé par** un dispositif d'introduction et le stockage en mémoire des données concernant la provenance, le mode de réalisation travail/emballage, les sortes, le pourcentage ou la cadence de marquage avec association automatique ou manuelle du symbole de marque, et affichage sur l'écran ; - depuis un dispositif de relevé pour la couleur, le degré de coloration, le diamètre, les défauts sur la surface, le degré de sucre, la vitesse de transport, le poids, la position de la marque en creux de la queue ou du calice ; - depuis un dispositif pour le prétraitement de séchage/nettoyage de la surface cible et depuis un dispositif pour le post-traitement de la zone de marquage, où le poste de marquage au laser (H), conjointement avec le dispositif pour le nettoyage/séchage (G) et avec le poste de scellement (I) et l'éventuelle machine d'étiquetage (F), est relié à un calculateur électronique (RL) équipé d'une mémoire, d'un écran (M) et d'une imprimante (S), auxquels sont raccordés la totalité ou une partie des postes de relevé (B, C, D, E) de la machine de travail, des postes de relevé (V) pour les caractéristiques fonctionnelles de la machine de travail et des postes de relevé spécifiques, prévus par le procédé.

15. Dispositif de marquage selon la revendication 14, **caractérisé en ce que,** dans le cas du marquage de fruit (1) orientés selon deux rangées de transfert parallèles, au moyen d'un poste de marquage (H) unique, le dernier groupe optique (6d, 6e) mobile, par l'intermédiaire duquel le rayon laser est guidé avant qu'il touche la surface cible sur un fruit (1) à marquer, outre les déplacements qui génèrent le graphisme du marquage, effectue également des déplacements qui provoquent le dévoiement respectif vers les fruits (1) qui sont déplacés (1a) sur les deux rangées de transfert parallèles.

16. Dispositif de marquage selon la revendication 14, **caractérisé en ce que** le poste de nettoyage/séchage (G) présente au moins une buse pour de l'air comprimé.

17. Dispositif de marquage selon la revendication 14, **caractérisé en ce que** le poste de nettoyage/séchage (G) présente au moins un dispositif de brossage.

18. Dispositif de marquage selon la revendication 14, **caractérisé en ce que** le poste de nettoyage/séchage (G) présente au moins une buse pour de l'air comprimé, qui coopère avec un dispositif de brossage.

19. Dispositif de marquage selon la revendication 14, **caractérisé en ce que**, sur le poste de nettoyage/séchage (G), le séchage est obtenu ou assisté au moyen d'ultra-sons et/ou de lumière infra-rouge.

20. Dispositif de marquage selon la revendication 14, **caractérisé en ce que** le poste de scellement (I) est composé d'au moins un pulvérisateur pour de la cire, du vernis, ou un autre produit qui soit authentiquement un produit alimentaire, ayant un effet de scellement, en aval duquel est éventuellement disposée une buse pour de l'air comprimé et/ou une source de lumière, pour de la lumière infra-rouge.

21. Dispositif de marquage selon la revendication 14, **caractérisé en ce que** le poste de scellement (I) est composé d'une machine d'étiquetage.
